# EUROPÄISCHE PATENTANMELDUNG

(11) **EP 1 184 280 A2**
(43) Veröffentlichungstag der Anmeldung: **06.03.2002**
(21) Anmeldenummer: 01120304.9
(22) Anmeldetag: 24.08.2001
(51) Int. Cl.: B64G 1/22

(54) **Ausfahrbare Trägerstruktur aus verformbaren Rohrelementen**

(30) Priorität: 02.09.2000 DE 10043249
(71) Anmelder: Astrium GmbH, 81663 München (DE)
(72) Erfinder: Roth, Martin, 82024 Taufkirchen (DE); Sperber, Franz, 83059 Kolbermoor (DE); Stich, Walter, 83714 Miesbach (DE)
(74) Vertreter: Ulrich, Thomas

(57) **Zusammenfassung**

Beschrieben wird eine ausfahrbare Trägerstruktur, bestehend aus mehreren miteinander verbundenen Einzelelementen wobei die Einzelelemente durch Rohrelemente (1, 11, 21, 31, 41, 51) gebildet werden, die reversibel verformbar sind, und die Rohrelemente an ihren Enden (4, 14, 24, 34, 44, 54, 7, 17, 27, 37) durch erste elastische Elemente (5) miteinander verbunden sind.

## Beschreibung

Die vorliegende Erfindung betrifft eine ausfahrbare Trägerstruktur, die aus mehreren miteinander verbundenen Einzelelementen aufgebaut ist, insbesondere für Anwendungen in der Raumfahrttechnologie. Eine solche Trägerstruktur kann beispielsweise als Maststruktur oder als Strebenstruktur dienen und auch unabhängig von Anwendungen in der Raumfahrttechnik Verwendung finden.

Eine solche Maststruktur ist beispielsweise aus EP 0 858 946 bekannt, in der ein Mast aus scherenförmig miteinander verbundenen Einzelstreben beschrieben wird. Aus DE 2 110 626 sind Streben aus Einzelelementen bekannt, die an ihren Enden flexibel miteinander verbunden sind. Außerdem sind dort Streben beschrieben, die durch abrollen eines Bandes mit innerer mechanischer Spannung (Maßbandeffekt) gebildet werden. DE 32 23 839 beschreibt einen zusammenfaltbaren Solargenerator, der durch einen entfaltbaren Mast aus einzelnen Mastabschnitten gehalten wird.

Nachteilig an diesem Stand der Technik ist jedoch, dass zur Erzielung der nötigen mechanischen Steifigkeit im ausgefahrenen Zustand der Trägerstruktur sehr massive Einzelelemente benötigt werden, welche wiederum im gestauten Zustand der Struktur ein großes Stauvolumen beanspruchen. Wird andererseits die Variante eines Abrollens eines vorgespannten Materials angewendet, wobei gleichzeitig eine hohe Steifigkeit im ausgefahrenen Zustand gewährleistet sein soll, so besteht die Gefahr der mechanischen Zerstörung des Trägermaterials durch die starke Verformung beim Verstauen in aufgerolltem Zustand.

Aufgabe der vorliegenden Erfindung ist es daher, eine ausfahrbare Trägerstruktur bereitzustellen, die ein möglichst geringes Stauvolumen im eingefahrenen Zustand bei möglichst hoher Steifigkeit im ausgefahrenen Zustand gewährleistet.

Diese Aufgabe wird gelöst durch die Merkmale des vorliegenden Patentanspruchs 1.

Die erfindungsgemäße ausfahrbare Trägerstruktur weist als Einzelelemente Rohrelemente auf, die derart reversibel verformbar sind, dass eine Änderung der Querschnittsfläche der Rohrelemente senkrecht zu ihrer Längserstreckung erfolgen kann. Somit können die Rohrelemente durch eine Krafteinwirkung oder Vorspannung senkrecht zu ihrer Längserstreckung zusammengedrückt werden, was das benötigte Stauvolumen der Rohrelemente verringert. Wird die Krafteinwirkung oder Vorspannung wieder aufgehoben, so kehren die Rohrelemente reversibel zu ihrer ursprünglichen Form zurück. Andererseits gewährleistet die Ausbildung der Einzelelemente als Rohrelemente eine hohe Steifigkeit der einzelnen Elemente, sobald die Krafteinwirkung oder Vorspannung aufgehoben wurde.

Die Rohrelemente an ihren Enden durch elastische Elemente miteinander verbunden. Damit können die Rohrelemente ziehharmonikaförmig gestaut werden, wodurch ein Stapel aus einzelnen Rohrelementen gebildet werden kann, die senkrecht zur Längserstreckung der ausgefahrenen Trägerstruktur aufeinander liegen. Man erhält somit eine sehr kompakte Staumöglichkeit für die einzelnen Rohrelemente, wobei das Stauvolumen durch Ausübung einer entsprechenden Kraft oder Vorspannung wie oben beschrieben über eine Verformung der Rohrelemente weiter reduziert werden kann. Andererseits wird durch die geeignete Einstellung der inneren mechanischen Vorspannung der elastischen Elemente erreicht, dass bei einer Aufhebung der Kraft oder Vorspannung eine automatische Entfaltung der Trägerstruktur durch diese Vorspannung der mechanischen Elemente und damit ein Ausfahren der Struktur erfolgen kann. Die innere Vorspannung der elastischen Elemente garantiert auch die Steifigkeit der Struktur im ausgefahrenen Zustand.

Um eine reversible Verformbarkeit der Rohrelemente zu gewährleisten, ist es nötig, die Rohrelementen elastisch zu gestalten. Es können dabei die Rohrelemente selbst aus einem elastischen Material bestehen. Es kann aber auch vorgesehen werden, dass die Rohrelemente aus Teilsegmenten bestehen, die sich in Längsrichtung der Rohrelemente erstrecken und die entlang von Mantellinien der Rohrelemente durch weitere elastische Elemente oder Gelenke miteinander verbunden sind. Sind elastische Elemente vorgesehen, können die einzelnen Teilsegmente eine zusätzliche Elastizität aufweisen, die jedoch in der Regel geringer ausgelegt sein kann als die Elastizität der weiteren elastischen Elemente.

Es können die ersten elastischen Elemente an den Enden der Rohrelemente und/oder die weiteren elastischen Elemente entlang der Mantellinien der Teilsegmente, sofern solche vorgesehen sind, beispielsweise Blattfedern aufweisen. Zu einer weiteren Versteifung der Verbindung der einzelnen Rohrelemente durch elastische Elemente kann vorgesehen werden, dass jedes Rohrelement durch zwei elastische Elemente mit jedem in Längsrichtung angrenzenden Rohrelement verbunden ist, wobei jedes elastische Element zwei gegenüberliegende Blattfedern mit entgegengesetzter Krümmung senkrecht zur Längsrichtung aufweist, so dass im ausgefahrenen Zustand die einzelnen Blattfedern der elastischen Elemente gegeneinander Wirken und die Steifigkeit jedes elastischen Elements erhöhen.

Grundsätzlich können die Rohrelemente in einer einzelnen Reihe von miteinander verbundenen Rohrelementen angeordnet werden, so dass im ausgefahrenen Zustand ein einzelner Träger, also z.B. eine Einzelstrebe oder ein Einzelmast entsteht. Es kann aber auch vorgesehen sein, dass mindestens ein erstes Rohrelement an einem ersten Ende mit einem ersten Ende eines zweiten Rohrelements verbunden ist, und an einem zweiten Ende mit einem zweiten Ende eines dritten, vierten und fünften Rohrelements verbunden ist. Dadurch können zwei parallel zueinander angeordnete Reihen von Rohrelementen gebildet werden, wobei die Reihen derart untereinander verbunden sind, dass jede zweite Verbindung der Rohrelemente der ersten Reihe mit jeder zweiten Verbindung der Rohrelemente der zweiten Reihe verbunden ist und im ausgefahrenen Zustand eine Doppelträgerstruktur, also z.B. eine Doppelstrebe oder einen Doppelmast bilden. Diese soll im folgenden kurz Doppelstruktur genannt werden. Durch eine solche Maßnahme kann die Steifigkeit der Trägerstruktur noch weiter erhöht werden.

Zusätzlich zu den elastischen Elementen wie beispielsweise Blattfedern können weitere Hilfsgelenke vorgesehen werden, die Seilrollen aufweisen und mit einem Seilgetriebe verbunden sind, so dass ein gesteuertes, gleichförmiges Ausfahren der Trägerstruktur garantiert werden kann. Die prinzipielle Funktionsweise solcher Seilgetriebe ist beispielsweise aus DE 197 28 844 bekannt.

Es können grundsätzlich alle geeigneten Materialien, insbesondere elastische Materialien, für die Rohrelemente verwendet werden. So können beispielsweise die Rohrelemente aus einem Kohlefaser-Material bestehen. Ein solches Material bietet den zusätzlichen Vorteil eines geringen Gewichts bei relativ großer Steifigkeit.

Die erfindungsgemäßen Trägerstrukturen sind grundsätzlich in jedem Bereich anwendbar, in dem ein geringes Stauvolumen bei gleichzeitiger hoher Steifigkeit der Struktur nötig ist. Eine spezielle Anwendung solcher Strukturen findet sich in Einrichtungen für ein Raumfahrzeug wie einem Satelliten oder einer Raumfähre, insbesondere in Antenneneinrichtungen oder Solargeneratoreinrichtungen, da gerade bei Raumfahrzeugen ein möglichst geringes Stauvolumen und bevorzugt auch ein geringes Gewicht aller Einrichtungen angestrebt wird, um möglichst viele Einrichtungen auf begrenztem Raum anbringen zu können und den benötigten Treibstoff zum Transport des Raumfahrzeuges ins Weltall möglichst gering zu halten.

Ein spezielles Ausführungsbeispiel der vorliegenden Erfindung wird nachfolgend anhand der Figuren 1 bis 7 erläutert.

Es zeigen:
- Fig. 1:: Querschnitt durch übereinanderliegende, verformte Rohrelemente im gestauten Zustand
- Fig. 2:: Schematische Darstellung eines elastischen Elements am Ende der Rohrelemente
- Fig. 3:: Schematische Darstellung eines elastischen Elements entlang einer Mantellinie eines Rohrelements
- Fig. 4:: Querschnitt durch eine Doppelstruktur im ausgefahrenen Zustand
- Fig. 5:: Ansicht einer Verbindung von Rohrelementen einer Doppelstruktur durch elastische Elemente
- Fig. 6:: Ansicht eines elastischen Elements nach Fig. 5
- Fig. 7:: Darstellung des Ausfahrens einer erfindungsgemäßen Doppelstruktur
- Fig. 8:: Verbindung nach Fig. 5 mit Hilfsgelenken und Seilgetriebe
- Fig. 9:: Gelenkige Verbindung von Rohrelementen und Querträger am Ende der Doppelstruktur

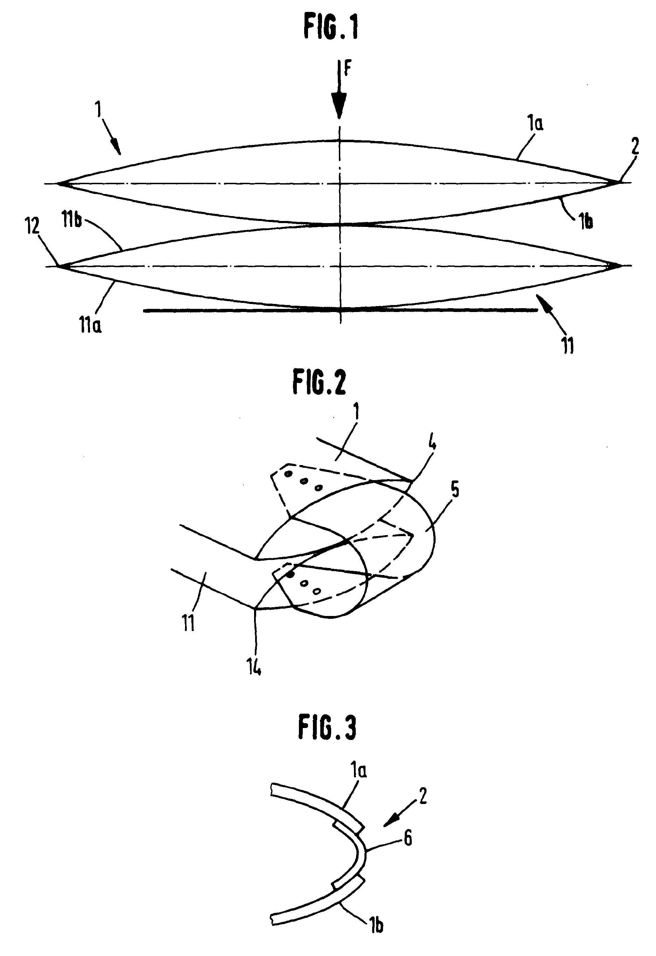

Figur 1 zeigt zwei übereinanderliegende, verformte Rohrelemente 1, 11 im gestauten Zustand, wobei das untere Rohrelement 11 z.B. durch ein weiteres, nicht dargestelltes Rohrelement oder eine Unterstützungsfläche gestützt wird. Auf das obere Rohrelement 1 wird eine senkrecht wirkende Kraft oder Vorspannung F ausgeübt, die zu einer Verformung der Rohrelemente 1, 11 führt, wodurch sich die dargestellte Querschnittsfläche senkrecht zur Längserstreckung der Rohrelemente 1, 11 ändert.

Die Rohrelemente 1, 11 in Fig. 1 bestehen aus je zwei halbzylinderförmigen, hohlen Teilsegmenten 1 a, 1 b, 11 a, 11 b, die jeweils eine gewisse Elastizität besitzen. Diese bestehen beispielsweise aus einem Kohlefaser-Werkstoff. An den Schnittlinien 2, 12 entlang von Mantellinien der Rohrelemente 1, 11 sind die Teilsegmente 1 a, 1 b, 11 a, 11 b durch elastische Elemente 6 wie Blattfedern oder alternativ durch Gelenke miteinander verbunden, wie in Fig. 3 dargestellt.

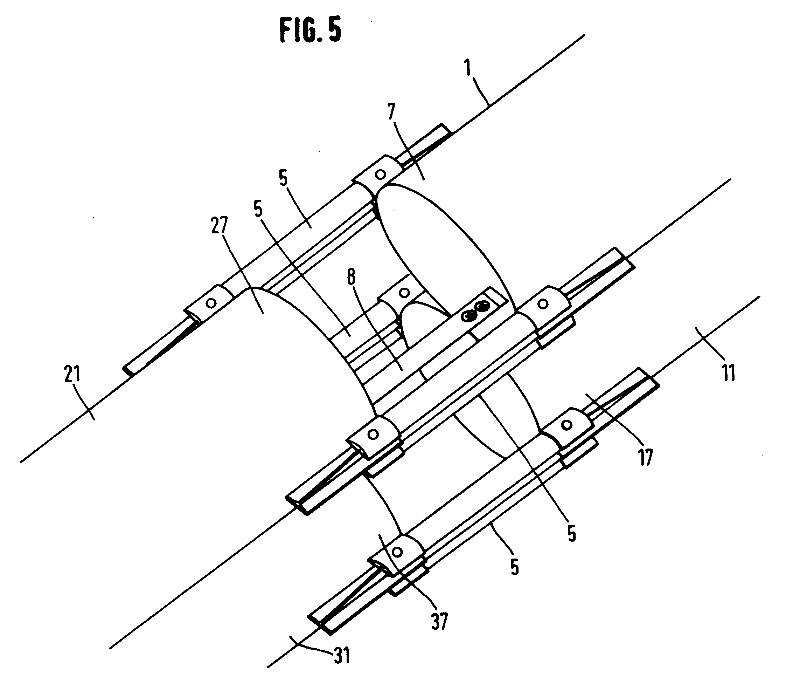

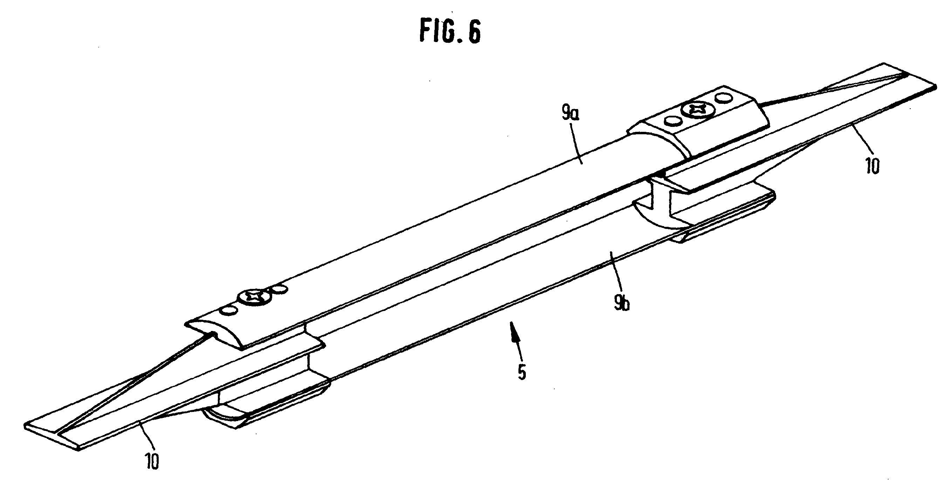

An ihren Enden 4, 14 sind die Rohrelemente 1, 11 durch elastische Elemente 5 wie Blattfeder-Anordnungen miteinander verbunden, wie schematisch in Fig. 2 dargestellt ist. Diese stellt eine Einzelstrebe oder einen Einzelmast dar, d.h. der Mast oder die Strebe würde hier nur durch eine einzelne Reihe von Rohrelementen 1, 11 gebildet. Die spezielle Ausgestaltung der elastischen Elemente kann je nach den spezifischen Vorgaben für die Elastizität und Steifigkeit angepasst werden. Ein Beispiel hierzu zeigen die Figuren 5 und 6.

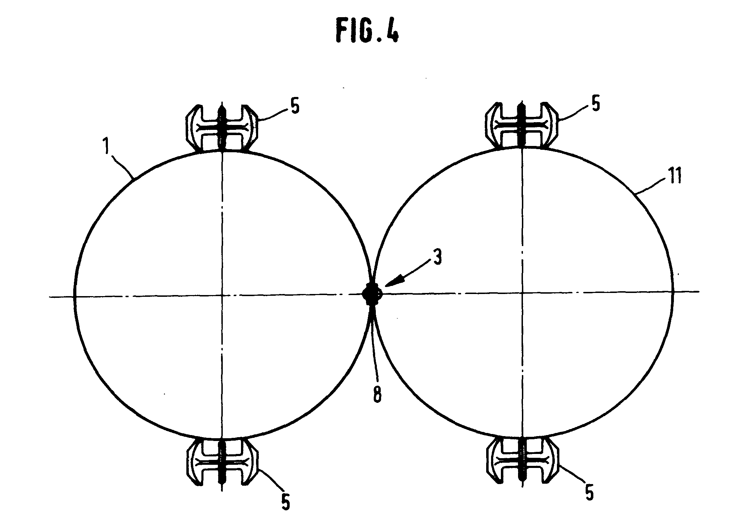

Fig. 5 zeigt ausschnitthaft eine Ansicht einer Doppelstruktur mit vier Rohrelementen 1, 11, 21, 31 in ausgefahrenem Zustand, wobei die Rohrelemente 1 und 21 in Längsrichtung hintereinander angeordnet sind und die Rohrelemente 11 und 31 ebenfalls in Längsrichtung hintereinander, aber parallel zu den Rohrelementen 1 und 21 angeordnet sind. Dies ist auch im Querschnitt in Fig. 4 dargestellt.

Es sind jeweils die Rohrelemente 1, 21 und 11,31, die in einer Reihe hintereinander angeordnet sind, durch je zwei elastische Elemente 5 miteinander verbunden, die einander gegenüberliegend auf der Mantelfläche der Rohrelemente 1, 11, 21, 31 angeordnet sind. Die elastischen Elemente 5, die in Fig. 6 verdeutlicht dargestellt sind, umfassen Halterungen 10, die mit den Rohrelementen 1, 11, 21, 31 fest verbunden werden und mit den Halterungen 10 verbundene, senkrecht zur Längsrichtung gekrümmte Blattfederpaare 9a, 9b. Die Krümmung der Blattfeder 9a ist entgegengesetzt zur Krümmung der Blattfeder 9b, so dass im ausgefahrenen Zustand der Struktur, in dem die Blattfedern die in Fig. 6 gezeigte gestreckte Form annehmen, bei einer möglichen Krafteinwirkung nach oben die Blattfeder 9a und bei einer möglichen Krafteinwirkung nach unten die Blattfeder 9b die Steifigkeit des elastischen Elements 5 garantiert.

Die Rohrelemente 1, 11, 21, 31 sind außerdem an einem ihrer Enden 7, 17, 27, 37 untereinander verbunden, wie Fig. 5 zeigt. Es ist eine Verbindung 8 z.B. in Form von zwei aufeinanderliegenden und in ihrer Mitte miteinander verbundenen ebenen Blattfedern vorgesehen, wobei jede der Blattfedern an einem ihrer Enden mit einem Rohrelement 1, 11, 21, 31 verbunden ist. Diese Verbindung bildet somit ein X- förmiges Scharniergelenk, so dass die Rohrelemente 1, 11, 21, 31 gegeneinander geschwenkt werden können. Im ausgefahrenen Zustand der Struktur liegen die Rohrelemente 1 und 11 sowie 21 und 31 jedoch in einem Bereich einer Mantellinie 3 aneinander an, wie Fig. 4 zeigt.

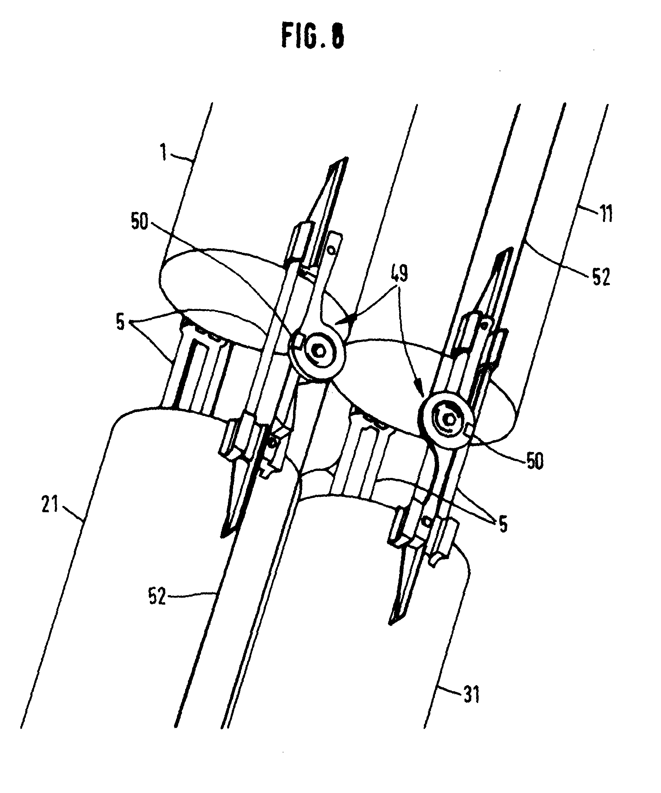

Um zusätzlich ein definiertes Ausfahren der Trägerstruktur zu ermöglichen, kann, wie in Fig. 8 dargestellt, vorgesehen werden, dass zusätzliche Hilfsgelenke 49 mit Seilrollen 50 mit den elastischen Elementen 5 verbunden sind. Die Seilrollen 50 sind mit einem Seilgetriebe 52 mit jeweils einer benachbarten Seilrolle 50 verbunden. Das Seilgetriebe 52 kann nun so eingerichtet werden, dass alle Rohrelemente gleichzeitig und gleichförmig ausgefahren werden, statt dass ein aufeinander folgendes ausfahren der einzelnen, ursprünglich aufeinander liegenden Rohrelemente erfolgt.

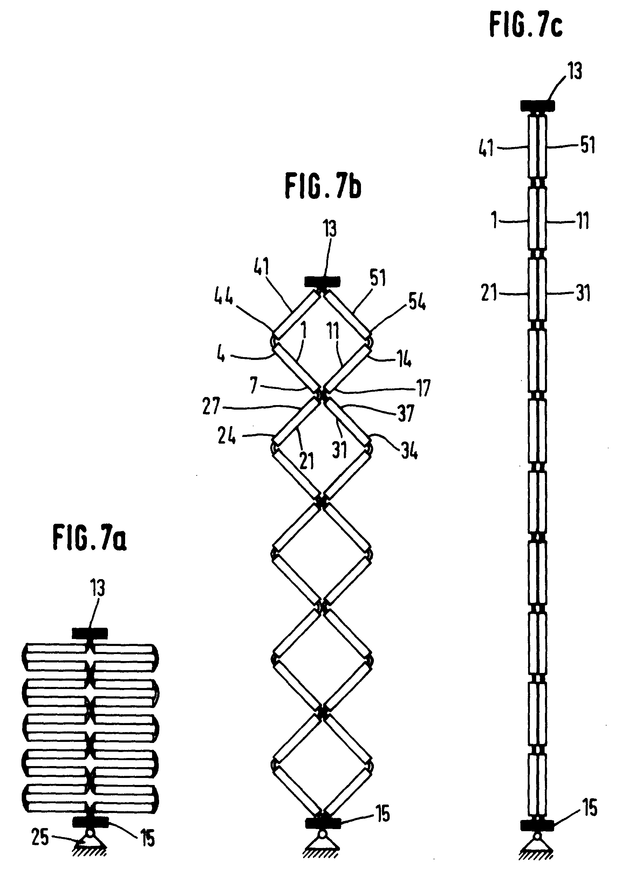

Fig. 7 zeigt das Ausfahren der Struktur nach Fig. 5 von einem gestauten Zustand a) in einen teilweise ausgefahrenen Zustand c). Im gestauten Zustand a) liegen die Rohrelemente in zwei Stapeln senkrecht zur Ausfahrrichtung aufeinander und werden zwischen einem oberen Querträger 13 und einem unteren Querträger 15 unter einer Vorspannung gehalten, die die Rohrelemente verformt, um ein möglichst geringes Stauvolumen zu erzielen. Der untere Querträger ist gelenkig mit einer Basisstruktur 25 wie beispielsweise einem Raumfahrzeug verbunden.

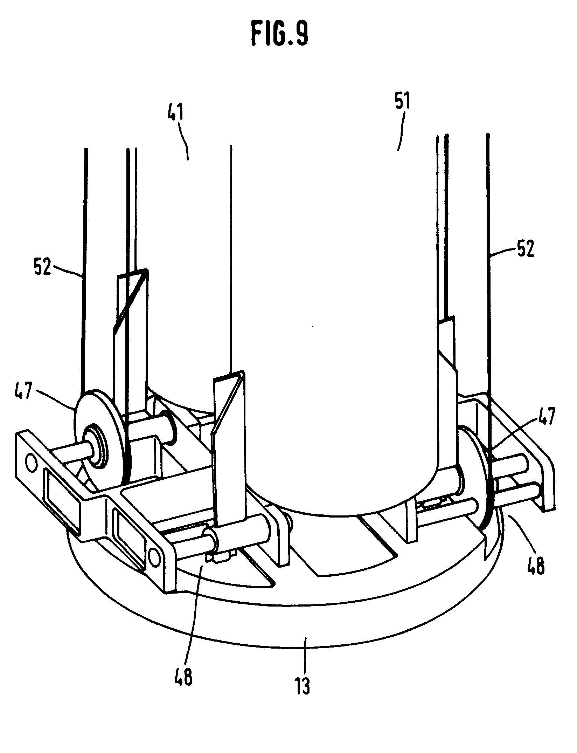

Wird nun die Vorspannung aufgehoben, so bewirken die flexiblen Elemente 5 an den Enden der Rohrelemente die Entfaltung und damit das Ausfahren der Struktur. Dabei wird über einen Zustand b) die Endstellung c) erreicht. Die Rohrelemente 1, 11, 21, 31, 41, 51 etc. werden gesteuert durch das Seilgetriebe 52 gleichförmig ausgefahren, wobei die Rohrelemente 1 und 41 an den ersten Enden 4, 44 und die Rohrelemente 11 und 51 an den ersten Enden 14 und 54 miteinander verbunden sind. Die Rohrelemente 41 und 51 sind überdies mit dem oberen Querträger 13 gelenkig verbunden, wie auch in Fig. 9 detailliert dargestellt. Dazu sind Gelenkverbindungen 48 zwischen Querträger 13 und den Rohrelementen 41, 51 vorgesehen. Außerdem erstreckt sich auch das Seilgetriebe 52 bis zum Querträger 13, wo im Bereich der Gelenkverbindungen weitere Seilrollen 47 vorgesehen sind. Eine analoge gelenkige Verbindung kann im Bereich der Basisstruktur 25 vorgesehen werden.

Da die Rohrelemente 1 und 11, wie in Fig. 7 b) angedeutet, an ihren zweiten Enden 7, 17 miteinander und mit den zweiten Enden 27, 37 der angrenzenden Rohrelemente 21, 31 verbunden sind, wird die Struktur im Zustand b) weiterhin zusammengehalten und die Rohrelemente 41 und 51 sowie 1 und 11 ordnen sich automatisch parallel zueinander an, wie in Fig. 7 c) gezeigt. Der Vorgang des Ausfahrens setzt sich bis zum vollständigen Ausfahren der Doppelstruktur fort. Dieser Endzustand ist in Fig. 7c dargestellt.

## Patentansprüche

1. Ausfahrbare Trägerstruktur, bestehend aus mehreren miteinander verbundenen Einzelelementen, **dadurch gekennzeichnet, dass**
- die Einzelelemente durch Rohrelemente (11, 11, 21, 31, 41, 51) gebildet werden, die derart reversibel verformbar sind, dass eine Änderung der Querschnittsfläche der Rohrelemente (1, 11, 21, 31, 41, 51) senkrecht zu ihrer Längserstreckung erfolgen kann und
- die Rohrelemente an ihren Enden (4, 14, 24, 34, 44, 54, 7, 17, 27, 37) durch erste elastische Elemente (5) miteinander verbunden sind.

2. Ausfahrbare Trägerstruktur nach Anspruch 1, **dadurch gekennzeichnet, dass** die Rohrelemente (1, 11, 21, 31, 41, 51) aus einem elastischen Material bestehen.

3. Ausfahrbare Trägerstruktur nach Anspruch 1 oder 2, **dadurch gekennzeichnet, dass** die Rohrelemente (1, 11, 21, 31, 41, 51) aus Teilsegmenten (1a, 1b, 11a, 11b) bestehen, die sich in Längsrichtung der Rohrelemente (1, 11, 21, 31, 41, 51) erstrecken und die entlang von Mantellinien (2 12) der Rohrelemente (1, 11, 21, 31, 41, 51) durch zweite elastische Elemente oder Gelenke (6) miteinander verbunden sind.

4. Ausfahrbare Trägerstruktur nach einem der Ansprüche 1 bis 3, **dadurch gekennzeichnet, dass** die ersten elastischen Elemente (5) und/oder der die zweiten elastischen Elemente (6) Blattfedern (9a, 9b) aufweisen.

5. Ausfahrbare Trägerstruktur nach Anspruch, **dadurch gekennzeichnet, dass** jedes Rohrelement (1, 11, 21, 31, 41, 51) durch zwei elastische Elemente (5) mit jedem in Längsrichtung angrenzenden Rohrelement (1, 11, 21, 31, 41, 51) verbunden ist, wobei jedes elastische Element (5) zwei gegenüberliegende Blattfedern (9a, 9b) mit entgegengesetzter Krümmung senkrecht zur Längsrichtung aufweist.

6. Ausfahrbare Trägerstruktur nach einem der Ansprüche 1 bis 5, **dadurch gekennzeichnet, dass** mindestens ein erstes Rohrelement (1) an einem ersten Ende (4) mit einem ersten Ende (44) eines zweiten Rohrelements (41) verbunden ist, und an einem zweiten Ende (7) mit einem zweiten Ende (17, 27, 37) eines dritten, vierten und fünften Rohrelements (11, 21, 31) verbunden ist.

7. Ausfahrbare Trägerstruktur nach einem der Ansprüche 1 bis 6, **dadurch gekennzeichnet, dass** zusätzlich zu den ersten elastischen Elementen (5) Hilfsgelenke (49) vorgesehen sind, die Seilrollen (50) aufweisen und mit einem Seilgetriebe (52) verbunden sind.

8. Ausfahrbare Trägerstruktur nach einem der Ansprüche 1 bis 7, **dadurch gekennzeichnet, dass** die Rohrelemente (1, 11, 21, 31, 41, 51) aus einem Kohlefaser-Material bestehen.
